(19) 

Europäisches
Patentamt

European
Patent Office

Office européen
des brevets

(11) **EP 4 386 341 A1**

(12) **DEMANDE DE BREVET EUROPEEN**

(43) Date de publication:
**19.06.2024 Bulletin 2024/25**

(21) Numéro de dépôt: **23215209.0**

(22) Date de dépôt: **08.12.2023**

(51) Classification Internationale des Brevets (IPC):
**G01K 7/01** *(2006.01)*          **G01K 7/42** *(2006.01)*

(52) Classification Coopérative des Brevets (CPC):
**G01K 7/015; G01K 7/425**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **14.12.2022 FR 2213391**

(71) Demandeur: **STMicroelectronics International
N.V.**
**1228 Plan-les-Ouates, Geneva (CH)**

(72) Inventeurs:
• **BINET, Vincent**
**13100 Aix en Provence (FR)**
• **ORTET, Sébastien**
**13790 Chateauneuf-le-Rouge (FR)**

(74) Mandataire: **Casalonga**
**Casalonga & Partners**
**Bayerstraße 71/73**
**80335 München (DE)**

(54) **CIRCUIT INTÉGRÉ COMPRENANT UN CAPTEUR DE TEMPÉRATURE**

(57)     Selon un aspect, il est proposé un circuit intégré comprenant un capteur de température (TSENS) comportant :
- deux transistors montés en diode et ayant des tailles différentes,
- un circuit tampon (TAMPC),
- un circuit de commutation (M1, M2) configuré pour pouvoir appliquer sélectivement en entrée du circuit tampon les tensions générées au travers des deux transistors,
- une unité de contrôle (UC) configuré pour commander le circuit de commutation (M1, M2) de façon à appliquer successivement en entrée du circuit tampon les tensions générées au travers des deux transistors,
- un convertisseur analogique-numérique (ADC) présentant une entrée connectée à la sortie du circuit tampon (TAMPC), le convertisseur analogique-numérique (ADC) étant configuré pour calculer une valeur numérique (BNW) correspondant à une différence ($\Delta$VBE) entre les tensions générées au travers des deux transistors, cette différence de tensions étant proportionnelle à la température absolue.

[Fig. 1]

EP 4 386 341 A1

## Description

Des modes de réalisation concernent les circuits intégrés, notamment ceux comportant un capteur de température.

Un circuit intégré peut comprendre un capteur de température pour répondre à différentes applications. Un capteur de température peut être utilisé afin de connaître une température du silicium du circuit intégré afin de prévenir une augmentation de la température du silicium au-delà d'une température adéquate pour un fonctionnement normal du circuit intégré. En particulier, un circuit intégré peut être configuré pour réduire une fréquence de fonctionnement de ce circuit intégré ou bien pour arrêter d'alimenter électriquement ce circuit intégré lorsque la température atteint un seuil donné de température.

Un capteur de température peut également être utilisé pour mesurer une température ambiante lorsque le silicium du circuit intégré est à cette même température, notamment lorsque le circuit intégré comprend un boîtier permettant d'évacuer efficacement la chaleur générée lors du fonctionnement du circuit intégré.

Un capteur de température peut également être utilisé pour contrer des attaques malveillantes sur le circuit intégré. En effet, certaines attaques malveillantes peuvent être réalisées en faisant subir des conditions extrêmes au circuit intégré. Il est notamment possible de faire subir des températures extrêmes au circuit intégré de façon à modifier le fonctionnement de ce dernier. La mesure de la température du circuit intégré peut ainsi servir à contrer une attaque malveillante lorsque la température mesurée est en dehors d'une plage de températures prédéfinie. En particulier, lorsqu'une telle température endehors de la plage prédéfinie est mesurée, le circuit intégré peut être configuré pour effacer des clés de sécurité ou bien pour stopper son alimentation électrique.

Les capteurs de température connus comprennent généralement un nombre important de composants électroniques pouvant présenter des non-linéarités. Ces non-linéarités peuvent se cumuler et ainsi impacter la précision du capteur de température. Afin d'améliorer la précision d'un tel capteur de température, il est important de calibrer le capteur de température. La calibration requiert de réaliser plusieurs mesures de température à différentes températures. Cette calibration peut être chronophage et complexe et donc coûteuse.

Il existe donc un besoin de proposer un circuit intégré comprenant un capteur de température présentant un nombre réduit d'éléments électroniques pouvant introduire des non-linéarités de façon à améliorer une précision du capteur de température.

Selon un aspect, il est proposé un circuit intégré comprenant un capteur de température comportant :

- deux transistors montés en diode et ayant des tailles différentes,

- un circuit tampon,
- un circuit de commutation configuré pour pouvoir appliquer sélectivement en entrée du circuit tampon des tensions générées au travers des deux transistors,
- une unité de contrôle configurée pour commander le circuit de commutation de façon à appliquer successivement en entrée du circuit tampon les tensions générées au travers des deux transistors,
- un convertisseur analogique-numérique présentant une entrée connectée à la sortie du circuit tampon, le convertisseur analogique-numérique étant configuré pour convertir successivement les tensions délivrées par le circuit tampon en des valeurs de tension numériques et pour calculer une valeur numérique correspondant à une différence entre les valeurs numériques des tensions générées au travers des deux transistors, cette différence de tensions étant proportionnelle à la température absolue et indépendante des tensions de décalage du convertisseur analogique-numérique et du circuit tampon.

Un tel capteur de température est donc configuré pour mesurer successivement les deux tensions générées par les transistors montés en diode pour calculer une différence de tensions. Une telle différence de tensions présente l'avantage de dépendre uniquement de la température.

Plus particulièrement, le circuit tampon et le convertisseur analogique-numérique peuvent présenter chacun une tension de décalage (en anglais « offset voltage ») qui s'additionne à chaque mesure de tension. Néanmoins, les tensions générées au travers des transistors sont acquises par le même circuit tampon et par le même convertisseur analogique-numérique. Ainsi, la différence de tensions calculée par le convertisseur analogique-numérique permet d'éliminer la tension de décalage du circuit tampon et la tension de décalage du convertisseur numérique analogique.

Avantageusement, le capteur de température comprend en outre :

- un convertisseur analogique-numérique présentant une entrée connectée à la sortie du circuit tampon, ce convertisseur analogique-numérique étant configuré pour convertir la tension correspondant à une différence entre ces deux tensions proportionnelles à la température en une valeur numérique,
- une unité de traitement configurée pour déterminer une température à partir de la valeur numérique calculée par le convertisseur analogique-numérique.

Dans un mode de réalisation avantageux, l'unité de traitement est configurée pour déterminer une température à partir de la valeur numérique calculée par le convertisseur analogique-numérique à l'aide d'une table de conversion. Un tel capteur de température présente l'avantage de pouvoir déterminer simplement une température du circuit intégré à partir d'une différence de tensions qui dépend uniquement de la température absolue du circuit intégré. Un tel capteur de température peut ainsi être calibré simplement et peut donc être fabriqué à coût réduit.

De préférence, le circuit tampon comprend un amplificateur opérationnel monté en suiveur et présentant une entrée connectée au circuit de commutation, le circuit de commutation étant configuré pour pouvoir appliquer sélectivement sur cette entrée de cet amplificateur opérationnel les tensions proportionnelles à la température générées par les deux transistors montés en diode.

Avantageusement, les deux transistors montés en diode sont des transistors bipolaires, chaque transistor présentant un émetteur ainsi qu'une base et un collecteur connectés électriquement à une masse. En variante, ces deux transistors peuvent être des transistors à effet de champ à grille isolée.

Avantageusement, le circuit intégré comprend un circuit de génération de courant proportionnel à une température absolue configuré pour générer un courant proportionnel à la température absolue.

Dans un mode de réalisation avantageux, le circuit de génération de courant proportionnel à la température absolue comprend :

- un premier transistor bipolaire et un deuxième transistor bipolaire montés en diode,
- un amplificateur opérationnel présentant une entrée inverseuse connectée à un émetteur du premier transistor bipolaire et une entrée non inverseuse connectée à un émetteur du deuxième transistor bipolaire par l'intermédiaire d'une résistance,
- deux transistors de type PMOS présentant chacun une grille connectée à une sortie de l'amplificateur opérationnel et une source configurée pour recevoir une tension d'alimentation, un premier transistor de type PMOS présentant un drain connecté à l'entrée inverseuse de l'amplificateur opérationnel et à l'émetteur du premier transistor bipolaire, et un deuxième transistor de type PMOS présentant un drain connecté à l'entrée non inverseuse de l'amplificateur opérationnel et à l'émetteur du deuxième transistor bipolaire.

Dans un mode de réalisation, le capteur de température comprend en outre un circuit sensible à la température absolue comportant un troisième transistor de type PMOS et un troisième transistor bipolaire monté en diode, le troisième transistor de type PMOS présentant une grille connectée à la sortie de l'amplificateur opérationnel du circuit de génération de courant proportionnel à la température absolue, une source configurée pour recevoir la tension d'alimentation et un drain connecté à un émetteur du troisième transistor bipolaire.

Dans un mode de réalisation, le circuit sensible à la température absolue comporte également un quatrième transistor de type PMOS et un quatrième transistor bipolaire monté en diode, le quatrième transistor de type PMOS présentant une grille connectée à la sortie de l'amplificateur opérationnel du circuit de génération de courant proportionnel à la température absolue, une source configurée pour recevoir la tension d'alimentation et un drain source connecté à un émetteur du quatrième transistor bipolaire.

Dans un mode de réalisation, le circuit de commutation est configuré pour appliquer sur l'entrée du circuit tampon soit une tension base-émetteur du troisième transistor bipolaire soit une tension base-émetteur du quatrième transistor bipolaire.

En variante, le circuit de commutation est configuré pour appliquer sur l'entrée du circuit tampon soit une tension base-émetteur du premier transistor bipolaire soit une tension base-émetteur du troisième transistor bipolaire.

En variante, le circuit de commutation est configuré pour appliquer sur l'entrée du circuit tampon soit une tension base-émetteur du premier transistor bipolaire soit une tension base-émetteur du deuxième transistor bipolaire.

D'autres avantages et caractéristiques de l'invention apparaîtront à l'examen de la description détaillée de modes de réalisation, nullement limitatifs, et des dessins annexés sur lesquels :

[Fig 1]
[Fig 2]

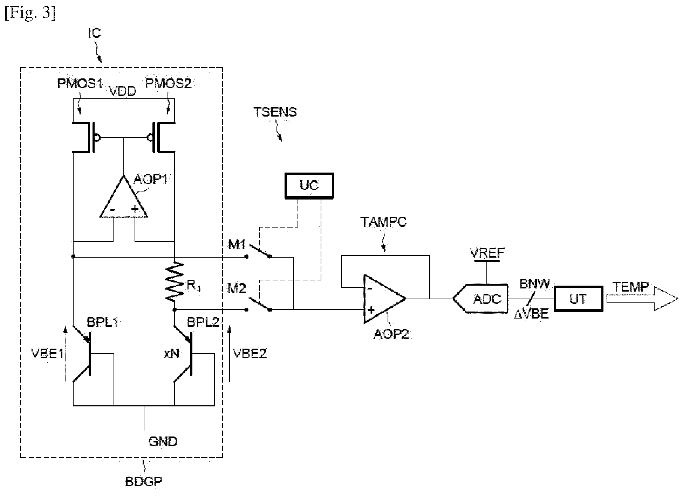

[Fig 3] illustrent des modes de réalisation et de mise en oeuvre de l'invention.

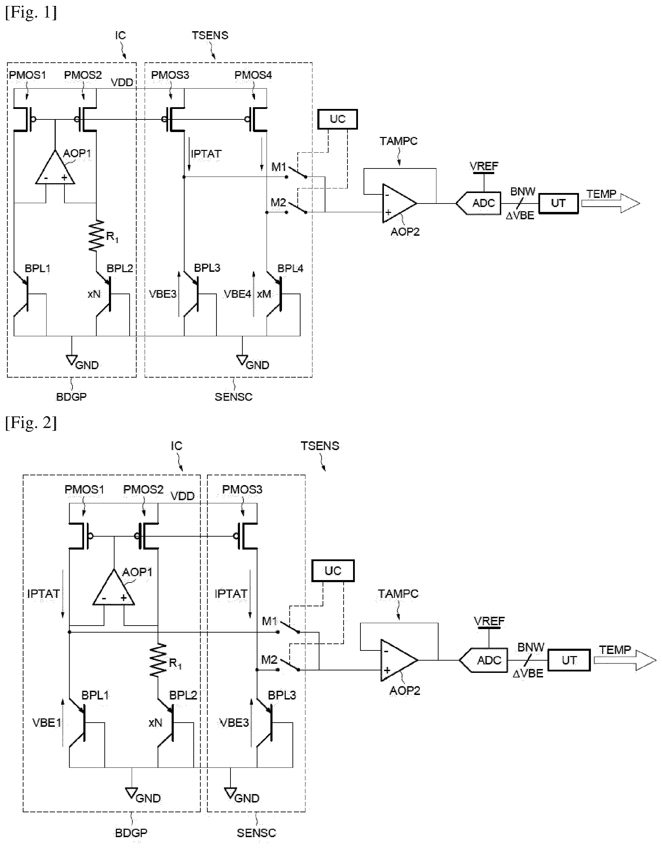

La figure 1 illustre un premier mode de réalisation d'un circuit intégré IC comprenant un capteur de température TSENS.

Le capteur de température TSENS comporte un circuit générateur de courant proportionnel à la température absolue BDGP (désigné également par l'expression anglosaxonne « bandgap »).

Le circuit générateur BDGP comprend deux transistors bipolaires BPL1, BPL2. Chaque transistor bipolaire BPL1, BPL2 est monté en diode.

Chaque transistor BPL1, BPL2 présente un émetteur, un collecteur et une base, la base étant connectée électriquement au collecteur et à une masse GND. Les transistors bipolaires BPL1, BPL2 ont des tailles différentes. La taille d'un transistor bipolaire BPL1, BPL2 correspond à la surface de l'émetteur de ce transistor bipolaire. En particulier, un rapport entre les tailles des transistors bipolaires BPL1, BPL2 est égal à N, où N peut être compris entre 4 et 32.

Le circuit générateur BDGP comprend également un amplificateur opérationnel AOP1. L'amplificateur opérationnel AOP1 présente une entrée inverseuse connectée électriquement à l'émetteur du premier transistor bipolaire BPL1. L'amplificateur opérationnel AOP1 présente également une entrée non inverseuse connectée électriquement à l'émetteur du deuxième transistor bipolaire BPL2 par l'intermédiaire d'un élément résistif R1. La valeur résistive de l'élément résistif R1 est choisie pour ajuster la valeur du courant traversant l'élément résistif R1 de sorte qu'il soit proportionnel à la température absolue.

Le circuit générateur BDGP comprend également deux transistors PMOS1, PMOS2 de type PMOS (c'est-à-dire des transistors à effet de champ à grille métal-oxyde canal de type P). Un premier transistor PMOS 1 présente une grille connectée à une sortie de l'amplificateur opérationnel AOP1, une source configurée pour recevoir une tension VDD et un drain connecté à l'entrée inverseuse de l'amplificateur opérationnel AOP1 et à l'émetteur du premier transistor bipolaire BPL1.

Un deuxième transistor PMOS2 présente une grille connectée à la sortie de l'amplificateur opérationnel AOP1, une source configurée pour recevoir une tension VDD et un drain connecté à l'entrée non inverseuse de l'amplificateur opérationnel AOP1 et à l'émetteur du deuxième transistor bipolaire BPL2.

L'amplificateur opérationnel AOP1 permet d'égaliser les tensions des signaux qu'il reçoit au niveau de son entrée non inverseuse et de son entrée inverseuse. Ainsi, la tension base-collecteur du premier transistor BPL1 est la même que la tension sur la borne de la résistance R1 reliée à l'entrée non inverseuse de l'amplificateur opérationnel AOP1.

Cela permet de générer un courant au travers de la résistance R1.

Le capteur de température TSENS comprend également un circuit sensible à la température SENSC. Ce circuit sensible à la température comprend deux branches BRCH1, BRCH2 comportant chacune un transistor bipolaire BPL3 and BPL4. Chaque transistor bipolaire BPL3, BPL4 est monté en diode.

Chaque transistor bipolaire BPL3, BPL4 présente un émetteur, un collecteur et une base, la base étant connectée électriquement au collecteur et à une masse GND. Les transistors bipolaires BPL3, BPL4 ont des tailles différentes. En particulier, un rapport entre les tailles des transistors bipolaires BPL3, BPL4 est égal à M, où M peut être compris entre 4 et 32.

Chaque branche BRCH1, BRCH2 comporte également un transistor de type PMOS (c'est-à-dire des transistors à effet de champ à grille métal-oxyde canal de type P).

En particulier, la première branche BRCH1 comprend un troisième transistor PMOS3 qui présente une grille connectée à une sortie de l'amplificateur opérationnel AOP1, une source configurée pour recevoir une tension VDD et un drain connecté à l'émetteur du troisième transistor bipolaire BPL3.

La deuxième branche BRCH2 comprend un quatrième transistor PMOS4 qui présente une grille connectée à la sortie de l'amplificateur opérationnel AOP1, une source configurée pour recevoir une tension VDD et un drain connecté à l'émetteur du quatrième transistor bipolaire BPL4.

Le troisième transistor PMOS3 et le quatrième transistor PMOS4 sont configurés pour copier le courant qui traverse la résistance R1 sur la première branche BRCH1 et sur la deuxième branche BRCH2, ces branches BRCH1 et BRCH2 étant alors traversées par un courant IPTAT proportionnel à la température absolue. Le courant qui traverse la résistance R1 peut notamment être recopié par les transistors PMOS3 et PMOS4 avec un facteur de recopie β entre les transistors PMOS3 et PMOS4, où β est supérieur ou égal à 1.

Le troisième transistor PMOS3 et le quatrième transistor PMOS4 sont identiques. En variante, les transistors PMOS3 et PMOS4 ont des tailles différentes. En particulier, un rapport entre les tailles des transistors PMOS3, PMOS4 peut être égal à M, où M peut être compris entre 4 et 32. Dans ce dernier cas, les transistors BPL3 et BPL4 sont identiques.

Cela permet de créer une tension base-émetteur VBE3 sur le troisième transistor bipolaire BPL3 et une tension base-émetteur VBE4 sur le quatrième transistor bipolaire. La différence entre la tension base émetteur VBE4 et la tension base émetteur VBE3 est alors proportionnelle à la température absolue (désignée par l'acronyme « PTAT » de l'anglais « proportional to absolute température »)

Le capteur de température TSENS comprend également un circuit tampon TAMPC. Ce circuit tampon TAMPC comprend un amplificateur opérationnel AOP2 monté en suiveur. L'amplificateur opérationnel AOP2 présente une entrée non inverseuse connectée électriquement à l'émetteur du troisième transistor bipolaire via un commutateur M1 et à l'émetteur du quatrième transistor bipolaire via un commutateur M2. L'amplificateur opérationnel AOP2 présente également une entrée inverseuse connectée à une sortie de cet amplificateur opérationnel AOP2.

Le capteur de température comporte également une unité de contrôle UC configurée pour commander les commutateurs M1 et M2.

En particulier, l'unité de contrôle UC est configurée pour ouvrir et fermer les commutateurs M1 et M2 alternativement. Ainsi, lorsque le commutateur M1 est fermé, alors le commutateur M2 est ouvert. Lorsque le commutateur M1 est ouvert, alors le commutateur M2 est fermé. De la sorte, la tension base-émetteur VBE3 et la tension base-émetteur VBE4 sont appliquées alternativement sur l'entrée non inverseuse de l'amplificateur opérationnel AOP2.

Le capteur de température TSENS comprend aussi un convertisseur analogique-numérique ADC. Le convertisseur analogique-numérique ADC présente une première entrée connectée à la sortie de l'amplificateur opérationnel AOP2

Le convertisseur analogique-numérique ADC présente également une deuxième entrée configurée pour recevoir une tension VREF. Cette tension VREF est une tension indépendante de la température. En particulier, le circuit intégré IC comprend un circuit de génération d'une tension de référence (non représenté) permettant de générer cette tension VREF. Par exemple, le circuit de génération de la tension VREF peut être obtenu à partir d'un circuit de génération de tension de référence (en anglais « Bandgap voltage référence ») permettant de générer la tension de VREF et d'un circuit tampon permettant de maintenir la tension de référence VREF constante en sortie de ce circuit tampon.

Les commutateurs M1 et M2 sont commandés de façon à obtenir successivement la tension base-émetteur VBE3 et la tension base-émetteur VBE4 en sortie du circuit tampon TAMPC.

Le convertisseur analogique-numérique ADC est configuré pour recevoir les tensions VBE3, VBE4 délivrées l'une après l'autre par le circuit tampon, puis pour convertir ces deux tensions VBE3, VBE4 en valeur numérique avant de calculer une différence entre ces valeurs numériques de tension afin d'obtenir la valeur ΔVBE. La valeur ΔVBE est ensuite délivrée en sortie du convertisseur analogique-numérique ADC sous la forme d'un mot numérique BNW.

Les tensions VBE3 et VBE4 sont acquises par le même amplificateur opérationnel AOP2 et par le même convertisseur analogique-numérique ADC. Cela permet d'éliminer une tension de décalage (en anglais « offset ») de l'amplificateur opérationnel AOP2 dans le signal en sortie de ce dernier ainsi qu'une tension de décalage du convertisseur numérique analogique ADC. Ainsi, la tension en sortie de l'ensemble comprenant amplificateur opérationnel AOP2 et le convertisseur analogique-numérique ADC dépend uniquement de la température et de constantes. En particulier, la différence de tensions ΔVBE est égale à $\dfrac{kT}{q}\ln(M \times \beta)$, où k est la constante de Boltzmann, q est la charge d'un électron, T est la température, et M correspond au rapport entre les tailles des transistors bipolaires BPL3 et BPL4, et β correspond au rapport de courant entre les transistors PMOS3 et PMOS4.

Le circuit générateur BDGP et le circuit sensible à la température SENSC comportant peu de composants électroniques, la différence de tensions ΔVBE n'est que faiblement impactées par les non-linéarités des composants électroniques. En particulier, les transistors PMOS1, PMOS2, PMOS3 et PMOS4 peuvent introduire des non-linéarités suffisamment faibles pour ne pas impacter la différence de tensions ΔVBE.

Le circuit intégré IC comprend également une unité de traitement UT. Cette unité de traitement UT est configurée pour déterminer une valeur de température TEMP à partir du mot numérique BNW générée par le convertisseur analogique-numérique ADC correspondant à la différence de tensions ΔVBE. Cette valeur de température TEMP peut être obtenue à partir d'une table de conversion obtenue pendant une étape de calibration du circuit intégré IC et mémorisée dans une mémoire du circuit intégré (non représentée).

Les performances du capteur de température TSENS peuvent être ajustées avec le rapport M entre les tailles des transistors bipolaires BPL3 et BPL4 et également avec le rapport β des recopies de courant réalisées par les transistors PMOS3 et PMOS4.

Un tel capteur de température présente l'avantage de déterminer la température du circuit intégré à partir d'une différence de tension ΔVBE dépendant uniquement de la température. De la sorte, un tel capteur de température est précis et peut être calibré rapidement. Un tel capteur de température peut donc être fabriqué à coût réduit.

La figure 2 illustre un deuxième mode de réalisation d'un circuit intégré IC comprenant un capteur de température TSENS.

Le circuit intégré IC comporte un circuit générateur de courant proportionnel à une température absolue BDGP identique à celui décrit précédemment. Le circuit générateur BDGP comprend donc deux transistors bipolaires BPL1, BPL2, un amplificateur opérationnel AOP1, une résistance R1 et deux transistors PMOS1, PMOS2 de type PMOS, tels que décrit précédemment.

Le capteur de température TSENS comprend également un circuit sensible à la température SENSC. Ce circuit sensible à la température comprend une seule branche BRCH1 comportant un transistor bipolaire BPL3. Ce transistor bipolaire BPL3 est monté en diode.

Ce transistor bipolaire BPL3 présente un émetteur, un collecteur et une base, la base étant connectée électriquement au collecteur et à une masse GND. Le transistor bipolaire BPL3 présente des tailles différentes de celles du transistor BPL1. En particulier, un rapport entre les tailles des transistors bipolaires BPL3 et BPL1 est égal à M, où M peut être compris entre 4 et 32.

La branche BRCH1 comporte également un troisième transistor PMOS3 de type PMOS (c'est-à-dire des transistors à effet de champ à grille métal-oxyde canal de type P). Ce troisième transistor PMOS3 présente une grille connectée à une sortie de l'amplificateur opérationnel AOP1, une source configurée pour recevoir une tension VDD et un drain connecté à l'émetteur du troisième transistor bipolaire BPL3.

Le troisième transistor PMOS3 est configuré pour copier le courant qui traverse la résistance R1 sur la première branche BRCH1 avec un facteur de recopie 1/β, où β est supérieur ou égal à 1.

Cela permet de créer une tension base-émetteur VBE3 sur le troisième transistor bipolaire BPL3. Cette tension base-émetteur VBE3 est alors dépendante à la température absolue.

Le capteur de température TSENS comprend également un circuit tampon TAMPC. Ce circuit tampon TAMPC comprend un amplificateur opérationnel AOP2 monté en suiveur. En particulier, l'amplificateur opérationnel AOP2 présente une entrée non inverseuse connectée électriquement à l'émetteur du premier transistor bipolaire BPL1 via un commutateur M1 et à l'émetteur du troisième transistor bipolaire BPL3 via un commutateur M2. L'amplificateur opérationnel AOP2 présente également une entrée inverseuse connectée à une sortie de cet amplificateur opérationnel AOP2.

Le capteur de température TSENS comporte également une unité de contrôle UC configurée pour commander les commutateurs M1 et M2.

En particulier, l'unité de contrôle UC est configurée pour ouvrir et fermer les commutateurs M1 et M2 alternativement. Ainsi, lorsque le commutateur M1 est fermé, alors le commutateur M2 est ouvert. Lorsque le commutateur M1 est ouvert, alors le commutateur M2 est fermé. De la sorte, la tension base-émetteur VBE1 du premier transistor bipolaire BLP1 et la tension base-émetteur VBE3 du troisième transistor bipolaire BLP3 sont appliquées alternativement sur l'entrée non inverseuse de l'amplificateur opérationnel AOP2.

Le capteur de température TSENS comprend aussi un convertisseur analogique-numérique ADC. Le convertisseur analogique-numérique ADC présente une première entrée connectée à la sortie de l'amplificateur opérationnel AOP2

Le convertisseur analogique-numérique ADC présente également une deuxième entrée configurée pour recevoir une tension VREF. Cette tension VREF est une tension indépendante de la température. En particulier, le circuit intégré IC comprend un circuit de génération d'une tension de référence (non représenté) permettant de générer cette tension VREF. Par exemple, le circuit de génération de la tension VREF peut être obtenu à partir d'un circuit de génération de tension de référence (en anglais « Bandgap voltage référence ») permettant de générer la tension de VREF et d'un circuit tampon permettant de maintenir la tension de référence VREF constante en sortie de ce circuit tampon.

Les commutateurs M1 et M2 sont commandés de façon à obtenir successivement la tension base-émetteur VBE1 et la tension base-émetteur VBE3 en sortie du circuit tampon TAMPC.

Le convertisseur analogique-numérique ADC est configuré pour recevoir les tensions VBE1, VBE3 délivrées l'une après l'autre par le circuit tampon, puis pour convertir ces deux tensions VBE1, VBE3 en valeur numérique avant de calculer une différence entre ces valeurs numériques de tension afin d'obtenir la valeur $\Delta$VBE. La valeur $\Delta$VBE est ensuite délivrée en sortie du convertisseur analogique-numérique ADC sous la forme d'un mot numérique BNW.

Les tensions VBE1 et VBE3 sont acquises par le même amplificateur opérationnel AOP2 et par le même convertisseur analogique-numérique. Cela permet d'éliminer une tension de décalage (en anglais « offset ») de l'amplificateur opérationnel AOP2 dans le signal en sortie de ce dernier, mais également une tension de décalage du convertisseur analogique-numérique ADC. Ainsi, la différence de tensions $\Delta$VBE en sortie du convertisseur analogique-numérique dépend uniquement de la température et de constantes. En particulier, la différence de

tensions $\Delta$VBE est égale à $\frac{kT}{q}\ln(M \times \beta)$, où k est la constante de Boltzmann, q est la charge d'un électron, T est la température, M correspond au rapport entre les tailles des transistors bipolaires BPL1 et BPL3, et $1/\beta$ correspond au rapport de courant entre les transistors PMOS 1 et PMOS3.

Le circuit intégré IC comprend également une unité de traitement UT. Cette unité de traitement UT est configurée pour déterminer une valeur de température TEMP à partir de la valeur numérique BNW générée par le convertisseur analogique-numérique ADC par rapport à la tension VREF.

Les performances du capteur de température TSENS peuvent être ajustées avec le rapport M entre les tailles des transistors bipolaires BLP1 et BLP3 et également avec le rapport $1/\beta$ des recopies de courant réalisées par les transistors PMOS1 et PMOS3.

Un tel capteur de température présente aussi l'avantage de déterminer la température à partir d'une différence de tension $\Delta$VBE dépendant uniquement de la température. De la sorte, un tel capteur de température est précis et peut être calibré rapidement. Un tel capteur de température peut donc être fabriqué à coût réduit.

La figure 3 illustre un troisième mode de réalisation d'un circuit intégré IC.

Le circuit intégré IC comporte un circuit générateur de courant proportionnel à une température absolue BDGP identique à celui décrit précédemment. Le circuit générateur BDGP comprend donc deux transistors bipolaires BPL1, BPL2, un amplificateur opérationnel AOP1, une résistance R1 et deux transistors PMOS1, PMOS2 de type PMOS, tels que décrit précédemment.

Le circuit intégré IC comprend également un circuit tampon TAMPC. Ce circuit tampon TAMPC comprend un amplificateur opérationnel AOP2 monté en suiveur. En particulier, l'amplificateur opérationnel AOP2 présente une entrée non inverseuse connectée électriquement à l'émetteur du premier transistor bipolaire BLP1 via un commutateur M1 et à l'émetteur du deuxième transistor bipolaire BLP2 via un commutateur M2. L'amplificateur opérationnel AOP2 présente également une entrée inverseuse connectée à une sortie de cet amplificateur opérationnel AOP2.

Le capteur de température TSENS comporte également une unité de contrôle UC configurée pour commander les commutateurs M1 et M2.

En particulier, l'unité de contrôle UC est configurée pour ouvrir et fermer les commutateurs M1 et M2 alternativement. Ainsi, lorsque le commutateur M1 est fermé, alors le commutateur M2 est ouvert. Lorsque le commutateur M1 est ouvert, alors le commutateur M2 est fermé. De la sorte, la tension base-émetteur VBE1 du premier transistor bipolaire BPL1 et la tension base-émetteur VBE2 du deuxième transistor bipolaire BPL2 sont appliquées alternativement sur l'entrée non inverseuse de l'amplificateur opérationnel AOP2.

Le capteur de température TSENS comprend aussi un convertisseur analogique-numérique ADC. Le convertisseur analogique-numérique ADC présente une première entrée connectée à la sortie de l'amplificateur opérationnel AOP2

Le convertisseur analogique-numérique ADC présente également une deuxième entrée configurée pour recevoir une tension VREF. Cette tension VREF est une tension indépendante de la température. En particulier, le circuit intégré IC comprend un circuit de génération d'une tension de référence (non représenté) permettant de générer cette tension VREF. Par exemple, le circuit de génération de la tension VREF peut être obtenu à partir d'un circuit de génération de tension de référence (en anglais « Bandgap voltage référence ») permettant de générer la tension de VREF et d'un circuit tampon permettant de maintenir la tension de référence VREF constante en sortie de ce circuit tampon.

Les commutateurs M1 et M2 sont commandés de façon à obtenir successivement la tension base-émetteur VBE1 et la tension base-émetteur VBE2 en sortie du circuit tampon TAMPC.

Le convertisseur analogique-numérique ADC est configuré pour recevoir les tensions VBE1, VBE2 délivrées l'une après l'autre par le circuit tampon, puis pour convertir ces deux tensions VBE1, VBE2 en valeur numérique avant de calculer une différence entre ces valeurs numériques de tension afin d'obtenir la valeur ΔVBE. La valeur ΔVBE est ensuite délivrée en sortie du convertisseur analogique-numérique ADC sous la forme d'un mot numérique BNW.

Les tensions VBE1 et VBE2 sont acquises par le même amplificateur opérationnel AOP2 et par le même convertisseur analogique-numérique ADC. Cela permet d'éliminer une tension de décalage (en anglais « offset ») de l'amplificateur opérationnel AOP2 dans le signal en sortie de ce dernier et également une tension de décalage du convertisseur analogique-numérique ADC. Ainsi, la différence de tensions ΔVBE en sortie du convertisseur analogique-numérique ADC dépend uniquement de la température et de constantes. En particulier, la différence de tensions ΔVBE est égale à $\dfrac{kT}{q}\ln(M)$, où k est la constante de Boltzmann, q est la charge d'un électron, T est la température, et M correspond au rapport entre les tailles des transistors bipolaires BPL1 et BPL2.

Le circuit générateur BDGP comportant peu de composants électroniques, la différence de tensions ΔVBE n'est que faiblement impactées par les non-linéarités des composants électroniques. En particulier, les transistors PMOS1, PMOS2 peuvent introduire des non-linéarités suffisamment faibles pour impacter légèrement ou ne pas impacter la différence de tensions ΔVBE.

Le circuit intégré IC comprend également une unité de traitement UT. Cette unité de traitement UT est configurée pour déterminer une valeur de température TEMP à partir de la valeur numérique BNW générée par le convertisseur analogique-numérique ADC.

Un tel capteur de température présente l'avantage de déterminer la température à partir d'une différence de tension ΔVBE dépendant uniquement de la température. De la sorte, un tel capteur de température est précis et peut être calibré rapidement. Un tel capteur de température peut donc être fabriqué à coût réduit.

Le circuit intégré IC peut comprendre plusieurs capteurs de température TSENS tels que ceux décrits précédemment, de manière à déterminer la température à différents endroits du circuit intégré.

## Revendications

1. Circuit intégré comprenant un capteur de température (TSENS) comportant :

   - deux transistors montés en diode et ayant des tailles différentes,
   - un circuit tampon (TAMPC),
   - un circuit de commutation (M1, M2) configuré pour pouvoir appliquer sélectivement en entrée du circuit tampon des tensions générées au travers des deux transistors,
   - une unité de contrôle (UC) configurée pour commander le circuit de commutation (M1, M2) de façon à appliquer successivement en entrée du circuit tampon les tensions générées au travers des deux transistors,
   - un convertisseur analogique-numérique (ADC) présentant une entrée connectée à la sortie du circuit tampon (TAMPC), le convertisseur analogique-numérique (ADC) étant configuré pour convertir successivement les tensions délivrées par le circuit tampon en des valeurs de tension numériques et pour calculer une valeur numérique (BNW) correspondant à une différence (ΔVBE) entre les valeurs numériques des tensions générées au travers des deux transistors, cette différence de tensions étant proportionnelle à la température absolue et indépendante des tensions de décalage du convertisseur analogique-numérique (ADC) et du circuit tampon (TAMPC).

2. Circuit intégré selon la revendication 1, dans lequel le capteur de température comprend une unité de traitement (UT) configurée pour déterminer une température (TEMP) à partir de la valeur numérique (BNW) calculée par le convertisseur analogique-numérique (ADC).

3. Circuit intégré selon la revendication 2, dans lequel l'unité de traitement est configurée pour déterminer une température (TEMP) à partir de la valeur numérique (BNW) calculée par le convertisseur analogique-numérique (ADC) à l'aide d'une table de conversion.

4. Circuit intégré selon l'une des revendications 1 à 3, dans lequel le circuit tampon (TAMPC) comprend un amplificateur opérationnel (AOP2) monté en suiveur et présentant une entrée connectée au circuit de commutation (M1, M2), le circuit de commutation (M1, M2) étant configuré pour pouvoir appliquer sélectivement sur cette entrée de cet amplificateur opérationnel (AOP2) les tensions proportionnelles à la température générées par les deux transistors montés en diode.

5. Circuit intégré selon l'une des revendications 1 à 4, dans lequel les deux transistors montés en diode sont des transistors bipolaires, chaque transistor présentant un émetteur ainsi qu'une base et un collecteur connectés électriquement à une masse.

6. Circuit intégré selon l'une des revendications 1 à 5, comprenant un circuit de génération de courant proportionnel à une température absolue (BDGP) configuré pour générer un courant proportionnel à la température absolue.

7. Circuit intégré selon la revendication 6, dans lequel le circuit de génération de courant proportionnel à la température absolue (BDGP) comprend :

   - un premier transistor bipolaire (BPL1) et un deuxième transistor bipolaire (BPL2) montés en diode,
   - un amplificateur opérationnel (AOP1) présentant une entrée inverseuse connectée à un émetteur du premier transistor bipolaire (BPL1) et une entrée non inverseuse connectée à un émetteur du deuxième transistor bipolaire (BPL2) par l'intermédiaire d'une résistance (R1),
   - deux transistors (PMOS1, PMOS2) de type PMOS présentant chacun une grille connectée à une sortie de l'amplificateur opérationnel (AOP1) et une source configurée pour recevoir une tension d'alimentation (VDD), un premier transistor (PMOS1) de type PMOS présentant un drain connecté à l'entrée inverseuse de l'amplificateur opérationnel (AOP1) et à l'émetteur du premier transistor bipolaire (BPL1), et un deuxième transistor (PMOS2) de type PMOS présentant un drain connecté à l'entrée non inverseuse de l'amplificateur opérationnel (AOP1) et à l'émetteur du deuxième transistor bipolaire (BPL2).

8. Circuit intégré selon la revendication 7, dans lequel le capteur de température (TSENS) comprend en outre un circuit sensible à la température absolue (SENSC) comportant un troisième transistor (PMOS3) de type PMOS et un troisième transistor bipolaire (BPL3) monté en diode, le troisième transistor (PMOS3) de type PMOS présentant une grille connectée à la sortie de l'amplificateur opérationnel (AOP1) du circuit de génération de courant proportionnel à une température absolue, une source configurée pour recevoir la tension d'alimentation et un drain connecté à un émetteur du troisième transistor bipolaire (BPL3).

9. Circuit intégré selon la revendication 8, dans lequel le circuit sensible à la température absolue (SENSC) comporte également un quatrième transistor (PMOS4) de type PMOS et un quatrième transistor bipolaire (BPL4) monté en diode, le quatrième transistor (PMOS4) de type PMOS présentant une grille connectée à la sortie de l'amplificateur opérationnel (AOP1) du circuit de génération de courant proportionnel à la température absolue, une source configurée pour recevoir la tension d'alimentation et un drain connecté à un émetteur du quatrième transistor bipolaire (BPL4).

10. Circuit intégré selon la revendication 9, dans lequel le circuit de commutation (M1, M2) est configuré pour appliquer sur l'entrée du circuit tampon (TAMPC) soit une tension base-émetteur du troisième transistor bipolaire (BPL3) soit une tension base-émetteur du quatrième transistor bipolaire (BPL4).

11. Circuit intégré selon la revendication 8, dans lequel le circuit de commutation (M1, M2) est configuré pour appliquer sur l'entrée du circuit tampon (TAMPC) soit une tension base-émetteur du premier transistor bipolaire (BPL1) soit une tension base-émetteur du troisième transistor bipolaire (BPL3).

12. Circuit intégré selon la revendication 7, dans lequel le circuit de commutation (M1, M2) est configuré pour appliquer sur l'entrée du circuit tampon (TAMPC) soit une tension base-émetteur du premier transistor bipolaire (BPL1) soit une tension base-émetteur du deuxième transistor bipolaire (BPL2).

[Fig. 1]

[Fig. 2]

[Fig. 3]

**EP 4 386 341 A1**

Europäisches
Patentamt
European
Patent Office
Office européen
des brevets

**RAPPORT DE RECHERCHE EUROPEENNE**

Numéro de la demande

**EP 23 21 5209**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/252594 A1 (JENKNER CHRISTIAN [AT] ET AL) 6 septembre 2018 (2018-09-06) * alinéas [0001], [0004], [0020], [0034], [0037], [0038], [0061], [0069], [0070], [0080] - [0082]; figure 6 * | 1-12 | INV. G01K7/01 G01K7/42 |
| A | US 2008/069176 A1 (PERTIJS MICHIEL A [NL] ET AL) 20 mars 2008 (2008-03-20) * alinéas [0001], [0003], [0026], [0028], [0034] - [0038]; figure 3 * | 1-12 | |
| A | IE S20 070 579 A2 (MICROSIL SEMICONDUCTOR LTD [IE]) 14 mai 2008 (2008-05-14) * abrégé * * page 1, ligne 10 - page 3, ligne 28 * * page 4, ligne 24 - page 5, ligne 3 * * page 5, lignes 29-31 * | 1-12 | |
| A | US 2016/363487 A1 (SAKANO YOSHIHISA [JP]) 15 décembre 2016 (2016-12-15) * alinéas [0005], [0006], [0035]; figure 1B * | 1-12 | DOMAINES TECHNIQUES RECHERCHES (IPC) G01K |

Le présent rapport a été établi pour toutes les revendications

| Lieu de la recherche | Date d'achèvement de la recherche | Examinateur |
|---|---|---|
| La Haye | 21 mars 2024 | Phleps, Stefanie |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 21 5209

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-03-2024

| Document brevet cité au rapport de recherche | Date de publication | Membre(s) de la famille de brevet(s) | Date de publication |
|---|---|---|---|
| US 2018252594 A1 | 06-09-2018 | DE 102017104434 B3 | 12-07-2018 |
| | | US 2018252594 A1 | 06-09-2018 |
| | | US 2021356329 A1 | 18-11-2021 |
| US 2008069176 A1 | 20-03-2008 | EP 1792152 A2 | 06-06-2007 |
| | | JP 2008513766 A | 01-05-2008 |
| | | US 2008069176 A1 | 20-03-2008 |
| | | WO 2006030374 A2 | 23-03-2006 |
| IE S20070579 A2 | 14-05-2008 | ----------------------------------- | |
| US 2016363487 A1 | 15-12-2016 | JP 2017003457 A | 05-01-2017 |
| | | US 2016363487 A1 | 15-12-2016 |

Pour tout renseignement concernant cette annexe : voir Journal Officiel de l'Office européen des brevets, No.12/82